(19) Europäisches Patentamt European Patent Office Office européen des brevets

(11) **EP 3 994 605 B1**

(12) **FASCICULE DE BREVET EUROPEEN**

(45) Date de publication et mention de la délivrance du brevet:
**02.08.2023 Bulletin 2023/31**

(21) Numéro de dépôt: **20731132.5**

(22) Date de dépôt: **12.06.2020**

(51) Classification Internationale des Brevets (IPC):
**G06V 20/56** *(2022.01)* **B60W 30/12** *(2020.01)*

(52) Classification Coopérative des Brevets (CPC):
**G06V 20/588**

(86) Numéro de dépôt international:
**PCT/EP2020/066256**

(87) Numéro de publication internationale:
**WO 2021/001133 (07.01.2021 Gazette 2021/01)**

(54) **PROCÉDÉ DE DÉTECTION D'UNE VOIE DE SORTIE POUR UN VÉHICULE AUTOMOBILE**

VERFAHREN ZUR ERKENNUNG EINER AUSFAHRTSPUR FÜR EIN KRAFTFAHRZEUG

METHOD FOR DETECTING AN EXIT LANE FOR A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2019 FR 1907317**

(43) Date de publication de la demande:
**11.05.2022 Bulletin 2022/19**

(73) Titulaires:
• **Renault s.a.s**
**92100 Boulogne Billancourt (FR)**
• **NISSAN MOTOR Co., Ltd.**
**Yokohama-shi, Kanagawa 221-0023 (JP)**

(72) Inventeur: **QUILLIARD, Raphael**
**91300 Massy (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**DE-A1-102010 062 129    US-A1- 2017 091 564**
**US-B1- 6 691 018**

**Description**

La présente invention concerne le domaine du contrôle de la trajectoire d'un véhicule automobile par détection de marquages routiers au sol à l'aide d'une caméra, en particulier une caméra embarquée au sein d'un véhicule automobile. Elle concerne plus particulièrement un procédé de détection de l'approche d'une voie de sortie pour un véhicule automobile.

L'invention s'applique avantageusement à la mise en oeuvre des systèmes de gestion du niveau d'autonomie des véhicules automobiles à conduite autonome, pour lesquels il est primordial de pouvoir contrôler avec fiabilité le positionnement du véhicule dans son environnement. En particulier, la problématique de contrôler la trajectoire d'un véhicule est aujourd'hui au coeur des premiers niveaux d'autonomie des véhicules permettant des phases de conduite autonome, c'est-à-dire pendant lesquelles ils sont conduits de façon automatisée, sans que le conducteur n'agisse sur le volant ou les pédales.

On connaît des algorithmes, mis en oeuvre dans l'unité de traitement vidéo qui récupère le flux vidéo de la caméra embarquée sur le véhicule, qui permettent d'extraire les lignes de marquages routiers au sol à partir du flux vidéo, de détecter la position du véhicule automobile par rapport aux marquages routiers au sol, et de corriger la trajectoire du véhicule par rapport aux marquages routiers détectés. On entend par « marquage » une ligne au sol de couleur différente de la chaussée et qui délimite un côté d'une voie de circulation. La ligne de marquage au sol peut être continue ou interrompue.

La majorité des approches utilisées par les algorithmes de détection souffrent cependant de faiblesses dans certaines situations réalistes courantes telles que l'approche d'une sortie dite coaxiale à la voie principale sur laquelle circule le véhicule, c'est-à-dire présentant une voie de décélération sensiblement dans le prolongement de la voie principale sur laquelle circule le véhicule. Dans la présente demande, on entend par « voie de décélération sensiblement dans le prolongement de la voie principale » le fait que la voie de sortie suit sensiblement la tangente à la voie principale.

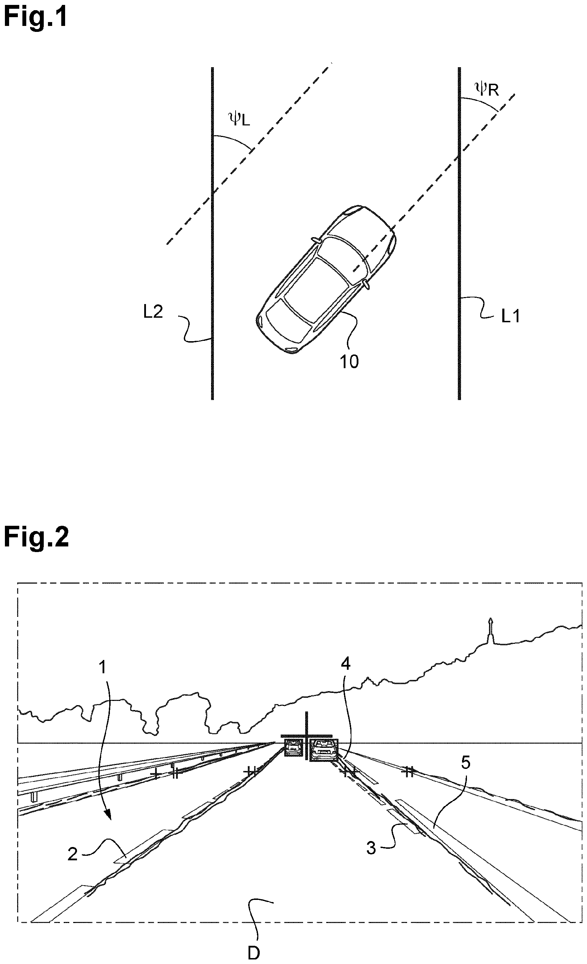

Aujourd'hui, la détection des voies de sortie à un embranchement par rapport à une voie principale sur laquelle circule le véhicule peut être établie à partir de la valeur des angles de cap du véhicule par rapport aux lignes observées, c'est-à-dire les angles entre respectivement la ligne de marquage au sol à gauche et la ligne de marquage au sol à droite d'une voie, et le repère du véhicule. Ainsi, comme illustré à la figure 1, $\psi_R$ est l'angle de cap du véhicule 10 par rapport à la ligne de marquage à droite L1 et $\psi_L$ est l'angle de cap du véhicule par rapport à la ligne de marquage à gauche L2.

Pour la plupart des sorties, on peut observer une augmentation significative de l'angle de cap du côté de la voie de sortie. Par exemple au commencement d'une sortie à droite, l'angle de cap à droite augmente brusquement. Ainsi, la détection de cette sortie peut être effectuée par comparaison de l'angle de cap $\Psi_R$ à un seuil prédéterminé.

En revanche, dans des situations où la voie de sortie se trouve être sensiblement dans la continuité de la voie principale, la configuration des lignes de marquage routier au sol peut « tromper » l'algorithme de détection, dans la mesure où, dans ces situations, on n'observe pas d'augmentation brusque de l'angle de cap du côté de la sortie. Ces situations concernent typiquement les voies de décélération conduisant à une sortie d'autoroute ou encore les voies de décélération conduisant à une aire d'autoroute.

la figure 2 montre un exemple qui illustre cette problématique. La voie principale sur laquelle circule le véhicule est la voie de droite D de la route référencée 1 et est délimité par les lignes de marquage au sol 2 et 3, délimitant latéralement à droite et à gauche la voie de circulation principale du véhicule. Cette voie de circulation tourne sensiblement vers la gauche, tandis qu'à proximité immédiate devant le véhicule, une voie de décélération 4 est présente sensiblement dans le prolongement de la voie principale D du véhicule par rapport à la position courante du véhicule dans sa voie. La ligne de sortie au sol 5 délimitant à droite cette voie de décélération 4 est sensiblement rectiligne, tandis que la ligne de marquage au sol 3 délimitant à droite la voie principale D est sensiblement courbée vers la gauche. Autrement dit, ici, l'algorithme de détection qui traite les données fournies par la caméra embarquée, devrait normalement en extraire des informations par rapport au marquage routier de la voie principale, à savoir les lignes de marquage au sol 2 et 3, et déterminer des actions correctrices à appliquer sur la trajectoire de véhicule de façon que la trajectoire du véhicule soit effectivement basée sur la détection des lignes de marquage au sol 2 et 3, permettant ainsi au véhicule de rester sur la voie principale. Or, du fait de la configuration des lignes de marquage au sol respectivement de la voie principale D et de la voie de décélération 4 située sensiblement dans le prolongement de la voie principale, l'algorithme de détection peut être amené à détecter à tort la ligne de sortie 5 de la voie de décélération 4 comme marquage au sol de la voie principale. En détectant par erreur cette ligne comme étant une ligne de marquage au sol de la voie principale, l'action correctrice appliquée à la trajectoire du véhicule va conduire ce dernier à quitter la voie principale pour emprunter la voie de décélération, alors que cette action n'est pas voulue. Par exemple, les documents US2017091564 et DE102010062129 se basent sur des variations d'angles de lignes de marquage pour détecter des voies de sortie.

Le document US2018156626 fait connaître un système permettant de contrôler la trajectoire d'un véhicule le long d'un itinéraire « normal » en détectant et en suivant, à l'aide d'une caméra embarquée, une ligne de marquage au sol de la voie dans laquelle circule le véhicule et en déterminant, à l'approche d'une voie d'entrée ou de sortie d'autoroute, s'il faut continuer ou non à suivre la ligne de marquage au sol, en fonction de l'itinéraire « normal » à suivre par le véhicule. Plus précisément, la détection de la ligne de marquage au sol est basée sur une information de couleur de la ligne de marquage au sol. Ainsi, en fonction d'informations sur la couleur d'une ligne de marquage au sol prédéterminée correspondant à l'itinéraire « normal » de conduite, si la couleur de la ligne de marquage au sol qui est détectée est identique aux informations concernant la couleur de la ligne de marquage au sol prédéterminée, le suivi de la ligne détectée est poursuivie, sinon il est interrompu.

Aussi, ce système devrait a priori être robuste vis-à-vis des erreurs de détection de ligne liées à l'approche de voies de sortie coaxiales, puisque la détection des lignes de marquage au sol n'est pas basée sur des mesures d'angle. Cependant, la détection repose ici sur une analyse des couleurs des lignes de marquage au sol détectées qui n'est pas sans inconvénient.

Notamment, le suivi et la reconnaissance de lignes des lignes de marquage routiers peuvent être dépendants des conditions d'acquisition des images embarquées, qui sont susceptibles de subir des ombres projetées, des éblouissements, rendant ainsi difficile leur exploitation en termes d'analyse fine des couleurs.

Aussi, un but de l'invention est de proposer un procédé de détection de l'approche d'une voie de sortie, qui permette en particulier de pouvoir détecter de façon simple et robuste l'approche d'une voie de sortie coaxiale à la voie principale du véhicule, pour pouvoir le cas échéant corriger la position du véhicule pour qu'il reste dans sa voie.

A cette fin, l'invention concerne un procédé de détection d'une voie de sortie pour un véhicule automobile, à partir d'une succession d'images vers l'avant du véhicule acquises par une caméra embarquée sur le véhicule au cours de son déplacement sur une voie de circulation principale délimitée latéralement par des lignes de marquage au sol situées le long du bord droit et gauche de ladite voie de circulation, ledit procédé comprenant :

une étape pour détecter dans lesdites images la ligne de marquage au sol droite et la ligne de marquage au sol gauche,

une étape pour déterminer un premier angle de cap du véhicule par rapport à la ligne de marquage au sol droite détectée et un second angle de cap du véhicule par rapport à la ligne de marquage au sol gauche détectée,

une étape apte à fournir un premier état de détection de voie de sortie, représentatif de la détection d'une voie de sortie standard à droite, respectivement à gauche, en fonction de la comparaison des valeurs du premier angle de cap, respectivement du second angle de cap, à un seuil prédéterminé,

ledit procédé étant caractérisé en ce qu'il comprend en outre une étape apte à fournir un second état de détection de voie de sortie, représentatif de la détection d'une voie de sortie à droite, respectivement à gauche, coaxiale à la voie de circulation principale, en fonction d'une part, de la comparaison entre les dérivées par rapport au temps de la variation des premier et second angles de cap et, d'autre part, de la vérification que la valeur du premier angle de cap, respectivement du second angle de cap, reste sensiblement proche d'une valeur nulle.

Ainsi, grâce aux tests de vérification effectués sur l'évolution des deux angles de cap du véhicule par rapport aux lignes de marquage au sol détectées à droite et à gauche, le second état de détection permet avantageusement de détecter des voies de sortie, dites coaxiales à la voie de circulation principale, qui ne sont pas prises en compte par le premier état de détection, qui est limité aux voies de sortie dite standards, pour lesquelles on peut observer une simple augmentation par rapport à un seuil considéré de l'angle de cap du véhicule du côté de la sortie. Ainsi, dans la présente demande l'expression « sortie standard » désigne une sortie non-coaxiale à la voie de circulation principale, i.e. ne présentant pas une voie de décélération dans le prolongement de la voie principale sur laquelle circule le véhicule.

Ainsi, en cas de marquage au sol équivoque, typiquement pour les voies de sortie coaxiales à la voie de circulation principale, le procédé de l'invention permet de les détecter de façon robuste avec la finalité de corriger la position du véhicule s'engageant par erreur dans une telle voie de sortie.

La détection des voies de sortie selon la présente invention est valable aussi bien pour les voies de sortie à droite que pour les voies de sortie à gauche, ce qui procure une grande flexibilité à la solution, en étant applicable à tout type de véhicule, tant à ceux adaptés aux pays dont la législation impose une conduite à gauche qu'à ceux adaptés aux pays dont la législation impose une conduite à gauche.

Avantageusement, le procédé comprend, lorsqu'un second état de détection a été fourni, d'arbitrer entre les premier et second états de détection de voie de sortie, de façon à accorder une priorité de traitement audit premier état de détection.

Avantageusement, ledit second état de détection de voie de sortie coaxiale à droite, respectivement à gauche, est fourni lorsque la dérivée par rapport au temps de la variation du second angle de cap, respectivement du premier angle de cap, est supérieure à la dérivée par rapport au temps de la variation du premier angle de cap, respectivement du second angle de cap, en ajoutant une marge minimale prédéfinie et que la valeur du premier angle de cap, respectivement du second angle de cap, est nulle à un seuil de tolérance prédéterminé près ;

Avantageusement, ledit premier état de détection de voie de sortie standard à droite, respectivement à gauche, est fourni lorsque la valeur du premier angle de cap, respectivement du second angle de cap, est supérieure audit seuil prédéterminé.

Avantageusement, le procédé comprend une étape de correction de la position de la ligne de marquage au sol détectée du côté où une voie de sortie a été détectée selon le premier ou le second état de détection de voie de sortie.

Avantageusement, la correction de ladite ligne de marquage au sol détectée du côté de la voie de sortie détectée consiste à reconstruire une ligne de marquage au sol corrigée du côté de la voie de sortie détectée, en fonction de la position de la ligne de marquage au sol détectée du côté opposé à la voie de sortie détectée et d'une mesure de la largeur de voie de circulation acquise à l'aide de la caméra.

Avantageusement, ladite mesure de la largeur de voie de circulation consiste en une valeur de mesure figée à la valeur de mesure acquise à un instant précédent la détection de ladite voie de sortie.

Avantageusement, le procédé comprend une étape de correction de la position latérale du véhicule dans sa voie de circulation en fonction des positions respectives de la ligne de marquage au sol détectée du côté opposé à la voie de sortie détectée et de la ligne de marquage au sol corrigée du côté de la voie de sortie détectée.

L'invention concerne également un dispositif de détection d'une voie de sortie pour un véhicule automobile circulant sur une voie de circulation principale délimitée latéralement par des lignes de marquage au sol, caractérisé en ce qu'il comprend au moins une unité de traitement adaptée à coopérer avec une caméra frontale équipant le véhicule et à mettre en oeuvre les étapes du procédé tel que décrit ci-dessus.

L'invention concerne encore un véhicule automobile, caractérisé en ce qu'il comprend au moins une caméra frontale embarquée et un dispositif tel que décrit ci-dessus.

D'autres caractéristiques et avantages de la présente invention apparaîtront plus clairement à la lecture de la description suivante donnée à titre d'exemple illustratif et non limitatif et faite en référence à la figure unique suivante :

[Fig. 1] illustre schématiquement la notion d'angle de cap du véhicule par rapport aux lignes de marquage au sol droite et gauche ;

[Fig. 2] illustre schématiquement la problématique du marquage au sol équivoque pour les voies de sorties dites coaxiales, induisant en erreur le système de détection des lignes basé sur la caméra ;

[Fig. 3] illustre schématiquement le principe de détection d'une voie de sortie dans le cadre de la détection d'une voie de sortie coaxiale à droite ;

[Fig. 4] illustre schématiquement le principe de détection d'une voie de sortie dans le cadre de la détection d'une voie de sortie coaxiale à gauche ;

[Fig. 5] illustre schématiquement le principe de détection d'une voie de sortie dans le cadre de la détection d'une voie de sortie standard à gauche ;

[Fig. 6] illustre schématiquement le principe de détection d'une voie de sortie dans le cadre de la détection d'une voie de sortie standard à droite.

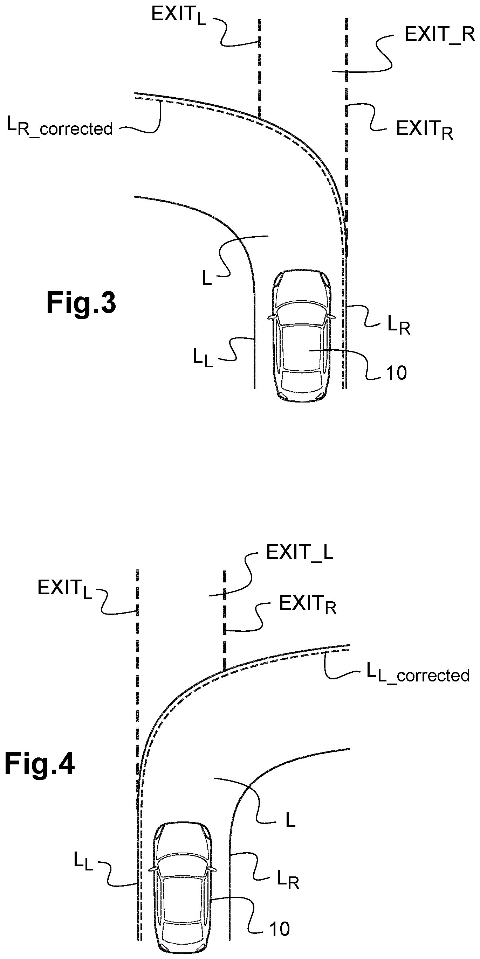

La figure 3 représente schématiquement un exemple de situation d'un véhicule 10 circulant sur une voie de circulation principale L, délimitée latéralement par des lignes de marquage routier au sol, respectivement une ligne de marquage au sol droite $L_R$, située le long du bord droit de la voie de circulation principale L et une ligne de marquage au sol gauche $L_L$, située le long du bord gauche de la voie de circulation principale L.

Le véhicule 10 est équipé d'un système d'assistance généralement connu sous le nom de « Lane Centering Assist », ou sous l'acronyme LCA, qui consiste à détecter la position du véhicule automobile par rapport aux lignes de marquage routier au sol et à corriger la trajectoire du véhicule, de façon à maintenir automatiquement le véhicule centré dans sa voie, soulageant le conducteur de la tâche de direction. Le système LCA agit donc sur la colonne de direction du véhicule lorsqu'il s'avère nécessaire de corriger la trajectoire.

Le système LCA comprend généralement une caméra orientée vers l'avant du véhicule automobile, par exemple installée en haut du pare-brise, au niveau de la jonction avec le toit du véhicule, ou encore installée derrière le rétroviseur intérieur du véhicule, de façon à permettre d'acquérir des images de la scène située devant le véhicule et à pouvoir détecter le marquage routier à l'avant du véhicule automobile.

Pour ce faire, l'étape d'acquisition des images par la caméra est suivie d'une étape au cours de laquelle une unité de traitement associée à la caméra récupère le flux d'images fourni par la caméra et l'analyse par des techniques de traitement d'image, pour détecter notamment les lignes de marquage routier au sol situées le long de la voie de circulation L empruntée par le véhicule automobile 10. L'unité de traitement est également adaptée pour fournir une estimation des deux angles de cap du véhicule par rapport à des lignes de marquage routier détectées de part et d'autre du véhicule.

La figure 3 illustre un embranchement de la voie principale comportant une voie de sortie à droite EXiT_R, qui s'étend dans la continuité de la voie de circulation principale L du véhicule, tandis que celle-ci bifurque vers la gauche au niveau de l'embranchement. La voie de sortie à droite est une voie de sortie dite coaxiale à la voie de circulation principale, c'est-à-dire une voie de sortie qui est sensiblement dans la continuité de la voie principale. Cette voie de sortie coaxiale EXIT_R est elle-même délimitée latéralement par des lignes de marquage routier au sol, respectivement une ligne de marquage au sol droite $EXIT_R$, située le long du bord droit de la voie de sortie coaxiale à droite EXIT_R et une ligne de marquage au sol gauche $EXIT_L$, située le long du bord gauche de la voie de sortie coaxiale à droite EXIT_R.

Cette situation d'embranchement illustrée à la figure 3 décrit typiquement la configuration d'un marquage au sol équivoque, susceptible de « tromper » l'algorithme de détection normalement utilisé par la caméra, qui se base sur la comparaison de la valeur des angles de cap du véhicule avec un seuil prédéterminé. Aussi, au début de la détection, à l'approche de la voie de sortie coaxiale à droite EXIT_R, la caméra du véhicule peut être amenée à détecter à tort la ligne de marquage au sol droite $EXIT_R$ située le long du bord droit de la voie de sortie coaxiale à droite EXIT_R comme marquage au sol de la voie principale L, ce qui peut conduire à une action correctrice non voulue appliquée à la trajectoire du véhicule lui faisant emprunter la voie de sortie coaxiale à droite EXIT_R, alors qu'il doit au contraire rester dans la voie de circulation principale L tournant vers la gauche. Autrement dit, ce type de voie de voie de sortie coaxiale n'est pas détecté par l'algorithme de détection classique associée à la caméra, qui assimile à tort ce type de voie de sortie coaxiale à la voie de circulation principale du véhicule.

L'invention prévoit à cet égard de mettre en oeuvre un second algorithme de détection, destiné à détecter de façon non équivoque ce type de voie de sortie coaxiale, telle que la voie de sortie coaxiale à droite EXIT_R selon l'exemple de la figure 3, de façon à pouvoir corriger la trajectoire du véhicule pour que celui-ci reste dans sa voie de circulation principale. De façon générale, cet algorithme de détection est conçu pour détecter une voie de sortie coaxiale d'une part, en comparant la dérivée moyenne des deux angles de cap à droite et à gauche sur une certaine durée et, d'autre part, en vérifiant que l'angle de cap du véhicule par rapport à la ligne de marquage routier au sol détectée du côté de la voie de sortie est bien nul.

Aussi, par application de ce principe général à l'exemple de la figure 3, l'algorithme de détection de voie de sortie coaxiale est apte à fournir un état de détection représentatif de la détection de la voie de sortie coaxiale à droite EXIT_R lorsque les deux conditions cumulatives suivantes sont remplies, à savoir lorsque l'angle de cap à gauche augmente davantage que l'angle de cap à droite et que l'angle de cap à droite reste proche de la valeur nulle, à un seuil de tolérance prédéterminé près. Cette dernière condition sur l'angle de cap à droite qui doit rester à une valeur proche de zéro permet d'éviter d'éliminer un cas de détection valide d'une voie de sortie à gauche, auquel cas l'angle de cap à droite ne resterait pas proche de zéro.

Ce double test mis en oeuvre par l'algorithme de détection de voie de sortie coaxiale pour déterminer si le véhicule est en approche d'une voie de sortie coaxiale à droite, peut se traduire selon la double expression suivante :
[Math. 1]

$$\frac{\psi_L(k) - (\psi_L(k - nDelay)}{nDelay} > \frac{\psi_R(k) - (\psi_R(k - nDelay)}{nDelay} + Margin$$

$$\psi_R(k) < \varepsilon \qquad (1)$$

Avec :

*nDelay* : le nombre de pas de temps représentant la durée utilisée pour la dérivée des deux angles de cap à gauche $\psi_L$ et à droite $\psi_R$ ;

k : le pas de temps ;

*Margin* : une marge de sécurité, permettant d'éviter les détections intempestives ;

$\varepsilon$ : le seuil de tolérance prédéterminé pour tester la valeur nulle de l'angle de cap à droite.

Le critère (1) ci-dessus permet donc de différencier une voie de sortie coaxiale à gauche d'une voie de sortie coaxiale à droite. En effet, pour une voie de sortie coaxiale à droite, l'angle de cap à droite $\psi_R$ sera faible voire nul. On vérifie donc que sa valeur est inférieure au seuil de tolérance prédéterminé $\varepsilon$.

Le principe de détection d'une voie de sortie coaxiale à droite qui vient d'être décrit en référence à la figure 3, bénéficie d'une application parfaitement symétrique pour la détection d'une voie de sortie coaxiale à gauche, comme illustré par l'exemple de la figure 4.

Ainsi, l'embranchement illustré à la figure 4 comporte une voie de sortie à gauche EXIT_L, qui s'étend dans la continuité de la voie de circulation principale L du véhicule, tandis que celle-ci bifurque vers la droite au niveau de l'embranchement. Cette voie de sortie coaxiale à gauche EXIT_L est elle-même délimitée latéralement par des lignes de marquage routier au sol, respectivement une ligne de marquage au sol droite EXIT$_R$, située le long du bord droit de la voie de sortie coaxiale à gauche EXIT_L et une ligne de marquage au sol gauche EXIT$_L$, située le long du bord gauche de la voie de sortie coaxiale à gauche EXIT_L.

L'algorithme de détection des voies de sortie coaxiales fournit alors un état de détection représentatif de la détection de la voie de sortie coaxiale à gauche EXIT_L lorsque les deux conditions cumulatives suivantes sont remplies, à savoir lorsque l'angle de cap à droite du véhicule augmente davantage que l'angle de cap à gauche et que l'angle de cap à gauche reste proche de zéro, au seuil de tolérance prédéterminé près.

Dans cette situation, le double test mis en oeuvre par l'algorithme de détection pour déterminer si l'on approche d'une voie de sortie coaxiale à gauche se traduit comme suit :

[Math. 2]

$$\frac{\psi_R(k) - (\psi_R(k - nDelay)}{nDelay} > \frac{\psi_L(k) - (\psi_L(k - nDelay)}{nDelay} + Margin$$

$$\psi_L(k) < \varepsilon \qquad (2)$$

Comme dans la situation précédente, le critère (2) permet de différencier une voie de sortie coaxiale à droite d'une voie de sortie coaxiale à gauche. En effet, pour une voie de sortie coaxiale à gauche, l'angle de cap à gauche $\psi_L$ sera faible voire nulle. On vérifie donc que sa valeur est inférieure au seuil de tolérance prédéterminé $\varepsilon$ .

Ainsi, les détections de voies de sortie coaxiales à gauche et droite ne peuvent pas cohabiter grâce à l'application des critères (1) et (2). En effet, on ne peut pas avoir en même temps les deux angles de cap à droite et gauche nuls et, simultanément détecter une voie de sortie.

La caméra est donc associée à un premier algorithme de détection, qui est classiquement destiné à détecter des voies de sortie en fonction de la comparaison de la valeur des angles de cap du véhicule, respectivement droite et gauche, à un seuil prédéterminé. En effet, pour la plupart des voies de sorties, dites standards, on peut observer une augmentation nette de l'angle de cap par rapport à la ligne détectée du côté de la voie de sortie. Cet algorithme est donc apte à fournir un premier état de détection représentatif de la détection d'une voie de sortie, à droite ou à gauche, dite standard, par opposition à coaxiale. Ce premier algorithme de détection ne permet cependant pas détecter les voies de sortie coaxiales, respectivement à droite et à gauche, comme illustrées dans les exemples des figures 3 et 4, d'où le second algorithme mis en oeuvre comme décrit ci-dessus, prévu à cet effet.

Autrement dit, le contrôleur du système LCA, destiné à corriger la trajectoire du véhicule pour qu'il reste dans sa voie au niveau des embranchements rencontrés, est amené à traiter des informations de détection de voies de sortie provenant de plusieurs sources, correspondant aux états de détection fournis par les premier et second algorithmes de détection.

On prévoit avantageusement d'arbitrer entre ces états de détection de voies de sortie, de façon à accorder une priorité de traitement à l'état de détection fourni par le premier algorithme de détection. Cet arbitrage donnant priorité à l'état de détection remonté par le premier algorithme de détection permet de ne pas créer de régression sur le système de correction déjà existant, qui est basé sur les informations de détection de voies de sortie standards à droite et à gauche, fournies par le premier algorithme de détection. En particulier, la priorité donnée à l'état de détection remonté par le premier algorithme de détection permet d'éviter de se retrouver dans une situation de détection erronée, dans laquelle une voie de sortie coaxiale à droite, respectivement à gauche, serait faussement détectée en lieu et place d'une voie de sortie standard à gauche, respectivement à droite.

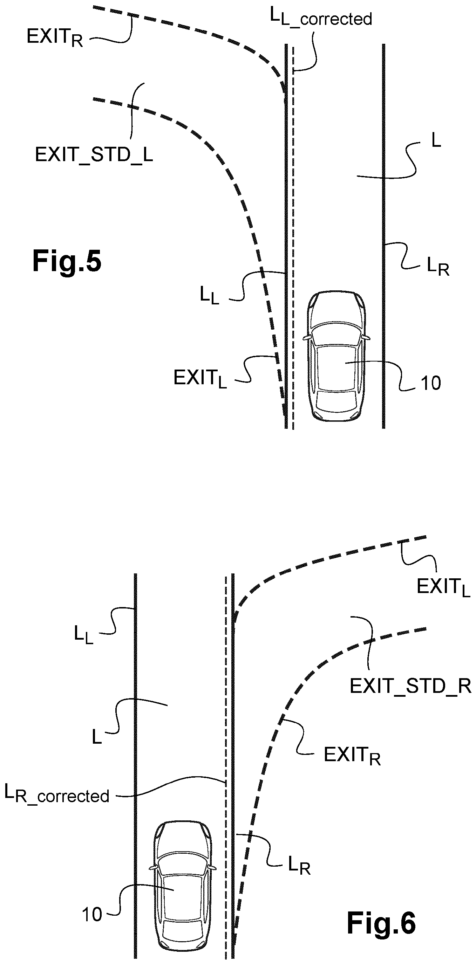

La figure 5 décrit une configuration d'embranchement illustrant l'intérêt de cet arbitrage. L'embranchement comporte ici une voie de sortie standard à gauche EXIT_STD_L, par rapport à la voie de circulation principale L du véhicule, du côté de laquelle on peut observer une augmentation brusque de l'angle de cap à gauche par rapport à la ligne de marquage routier au sol EXIT$_L$, située le long du bord gauche de la voie de sortie standard à gauche EXIT_STD_L. Dans ce cas de figure, l'algorithme de détection des voies de sortie standards fournit donc bien un état de détection représentatif de la détection de la voie de sortie standard à gauche EXIT_STD_L. Dans le même temps, l'algorithme de détection des voies de sortie coaxiales fournit également un état de détection représentatif de la détection d'une voie de sortie coaxiale à droite, puisque les deux conditions sont vérifiées, à savoir l'angle de cap à gauche par rapport à la ligne de marquage routier au sol EXIT$_L$ augmente plus que l'angle de cap à droite par rapport à la ligne de marquage routier au sol $L_R$ et l'angle de cap à droite reste bien proche de la valeur nulle. Cependant, ce dernier état de détection n'est pas considéré, car il est moins prioritaire par rapport à l'état de détection de la voie de sortie standard à gauche. Aussi, l'arbitrage permet de prendre en compte les détections selon un schéma de priorité imposant de considérer d'abord la détection issue du premier algorithme de détection des voies de sortie standard, puis la détection issue du second algorithme de détection des voies de sortie coaxiales, seulement si aucun état de détection n'est fourni par le premier algorithme de détection, autrement dit, si aucune voie de sortie standard n'est détectée.

Ce principe d'arbitrage entre les deux types de détection s'applique de la même façon pour permettre d'éviter de détecter une voie de sortie coaxiale à gauche, alors qu'il faut détecter une voie de sortie standard à droite.

Ainsi, la figure 6 décrit une configuration d'embranchement où il faut détecter une voie de sortie standard à droite pour pouvoir corriger correctement la trajectoire.

L'embranchement comporte ici une voie de sortie standard à droite EXIT STD_R, par rapport à la voie de circulation principale L du véhicule, du côté de laquelle on peut donc observer une augmentation brusque de l'angle de cap à droite par rapport à la ligne de marquage routier au sol $EXIT_R$, située le long du bord droit de la voie de sortie standard à droite EXIT_STD_R. Dans ce cas de figure, l'algorithme de détection des voies de sortie standards fournit donc bien un état de détection représentatif de la détection de la voie de sortie standard à droite EXIT_STD_R. Dans le même temps, l'algorithme de détection des voies de sortie coaxiales fournit également un état de détection représentatif de la détection d'une voie de sortie coaxiale à gauche, puisque les deux conditions sont vérifiées, à savoir l'angle de cap à droite par rapport à la ligne de marquage routier au sol $EXIT_R$ augmente plus que l'angle de cap à gauche par rapport à la ligne de marquage routier au sol $L_L$ et l'angle de cap à gauche reste bien proche de la valeur nulle. Cependant, grâce à l'arbitrage, ce dernier état de détection n'est pas considéré, car il est moins prioritaire par rapport à l'état de détection de la voie de sortie standard à droite.

Ce schéma de priorité résultant de l'arbitrage mis en oeuvre imposant de considérer d'abord la détection issue du premier algorithme de détection, puis celle issue du second algorithme de détection, seulement si le premier algorithme n'a rien détecté, peut se traduire de la façon suivante, par exemple dans le cas d'une détection d'une voie de sortie à droite, où détection_caméra_droite correspond à l'état de détection fourni par le premier algorithme de détection de voies de sortie standards et détection_coaxiale_droite correspond à l'état de détection fourni par le second algorithme de détection de voies de sortie coaxiales :

$$\text{Détection\_droite = détection\_caméra\_droite OR [détection\_coaxiale\_droite}$$
$$\text{AND NOT (détection\_caméra\_droite)]}$$

De cette manière, les informations de détection de voies de sortie coaxiales sont traitées comme des informations complémentaires, permettant de détecter une voie de sortie coaxiale non remontée par le premier algorithme de détection.

La détection des voies de sortie à droite ou à gauche étant rendue robuste dans toutes ces situations d'embranchement décrites précédemment, on va ensuite corriger la position des lignes de marquage routier au sol pour s'assurer que le véhicule reste bien dans sa voie de circulation principale. Pour ce faire, la ligne de marquage au sol détectée du côté de la voie de sortie détectée va être corrigée en reconstruisant une ligne de marquage au sol corrigée du côté de la voie de sortie détectée, en fonction de la position de la ligne de marquage au sol détectée du côté opposé à la voie de sortie détectée et d'une mesure de la largeur de voie de circulation acquise à l'aide de la caméra.

Ainsi lorsque la détection des lignes de marquage routier au sol $L_R$ et $L_L$ délimitant latéralement la voie de circulation principale L est réalisée par l'unité de traitement des images associée à la caméra, les positions latérales respectives des lignes de marquage au sol $L_R$ et $L_L$ par rapport à la caméra dans le repère du véhicule sont également déterminées.

Soient $pos_R$ et $pos_L$, les positions latérales respectives de ces lignes de marquage au sol par rapport à la caméra dans le repère du véhicule.

A partir de ces positions latérales respectives, on calcule la largeur de la voie de circulation principale L. Soit $LW(k)$ la largeur de voie calculée à un instant k à partir des valeurs absolues de ces positions latérales respectives :

[Math. 3]

$$LW(k) = abs(pos_R) + abs(pos_L)$$

Dès lors qu'une voie de sortie est détectée, à gauche ou à droite, selon les principes de l'invention exposés ci-dessus, la largeur de voie ainsi déterminée est figée à sa valeur précédente et maintenue dans le temps tant que la fin de voie de sortie n'est pas détectée. Cela permet de conserver une largeur de voie fiable. Puis, la ligne de marquage au sol située du côté de la voie de sortie détectée est reconstruite à partir de la position latérale de la ligne de marquage au sol détectée du coté opposé et de la valeur figée de la largeur de voie. De cette façon, la ligne de marquage au sol reconstruite suit l'évolution de la ligne de marquage au sol détectée du côté opposé à la voie de sortie détectée, mais en étant reportée de l'autre côté de la voie de circulation principale, c'est-à-dire du côté de la voie de sortie détectée, où se trouve la ligne de marquage au sol sur la base de laquelle on veut réguler la trajectoire du véhicule grâce au système LCA. Autrement dit, la correction effectuée sur la ligne de marquage au sol située du côté de la voie de sortie détectée est effectuée en symétrisant la ligne de marquage au sol détectée du côté opposé par rapport à la caméra.

Par exemple, selon l'exemple de la figure 3, lorsque la voie de sortie coaxiale à droite EXIT_R est détectée, la position de la ligne de marquage au sol droite délimitant la voie de circulation principale L du côté de la voie de sortie EXIT_R est corrigée de la façon suivante, à chaque pas de temps entre le début et la fin de la détection de la voie de sortie coaxiale à droite EXIT_R :

[Math. 4]

$$pos_{R,corrected}(k) = pos_L(k) + LW(k-1)$$

Avec $pos_{R,corrected}(k)$ la position latérale corrigée par rapport à la caméra de la ligne de marquage droite à l'instant k,

$pos_L(k)$ la position latérale par rapport à la caméra de la ligne de marquage au sol gauche déterminée à l'instant k , et $LW(k-1)$ la largeur de voie déterminée à l'instant (k-1) précédent la détection de la voie de sortie coaxiale à droite.

Cette correction permet de reconstruire une ligne de marquage au sol droite, référencée $L_{R\_corrected}$ sur la figure 3, délimitant la voie de circulation principale L du côté de la voie de sortie coaxiale à droite EXIT_R détectée.

Cette ligne de marquage au sol droite corrigée $L_{R\_corrected}$ suit, de façon symétrique par rapport à la caméra, l'évolution de la ligne de marquage au sol gauche $L_L$. Cette correction de la ligne située du côté de la voie de sortie détectée permet ainsi au système LCA de disposer de la bonne référence de ligne, à savoir $L_{R\_corrected}$, pour corriger la trajectoire du véhicule, de façon à maintenir automatiquement le véhicule centré dans sa voie de circulation principale L.

Dans les cas des exemples décrits précédemment aux figures 4, 5 et 6, ce principe de correction de ligne s'applique de la même façon, dès lors qu'une voie de sortie est détectée. Ainsi, dans tous ces cas de figure, la ligne de marquage au sol située du côté de la voie de sortie détectée est corrigée, permettant de corriger la trajectoire pour que le véhicule reste dans sa voie de circulation principale. Par exemple dans le cas de la détection de la voie de sortie standard à gauche illustré à la figure 5, la voie de sortie standard à gauche EXIT_STD_L est bien détectée par le premier algorithme de détection et selon les principes exposés ci-dessus, on reconstruit la ligne de marquage au sol gauche corrigée $L_{L\_corrected}$ qui suit, de façon symétrique par rapport à la caméra, l'évolution de la ligne de marquage au sol droite $L_R$.

**Revendications**

1. Procédé de détection d'une voie de sortie pour un véhicule automobile (10), à partir d'une succession d'images vers l'avant du véhicule acquises par une caméra embarquée sur le véhicule au cours de son déplacement sur une voie de circulation principale (L) délimitée latéralement par des lignes de marquage au sol situées le long du bord droit ($L_R$) et gauche ($L_L$) de ladite voie de circulation, ledit procédé comprenant :

   une étape pour détecter dans lesdites images la ligne de marquage au sol droite ($L_R$) et la ligne de marquage au sol gauche ($L_L$),
   une étape pour déterminer un premier angle de cap du véhicule par rapport à la ligne de marquage au sol droite détectée et un second angle de cap du véhicule par rapport à la ligne de marquage au sol gauche détectée,
   une étape apte à fournir un premier état de détection de voie de sortie,
   représentatif de la détection d'une voie de sortie standard à droite (EXIT_STD_R), respectivement à gauche (EXIT_STD_L), en fonction de la comparaison des valeurs du premier angle de cap, respectivement du second angle de cap, à un seuil prédéterminé,
   ledit procédé étant **caractérisé en ce qu'**il comprend en outre une étape apte à fournir un second état de détection de voie de sortie, représentatif de la détection d'une voie de sortie à droite (EXIT_R), respectivement à gauche (EXIT_L), coaxiale à la voie de circulation principale (L), en fonction d'une part, de la comparaison entre les dérivées par rapport au temps de la variation des premier et second angles de cap et, d'autre part, de la vérification que la valeur du premier angle de cap, respectivement du second angle de cap, reste sensiblement proche d'une valeur nulle.

2. Procédé selon la revendication 1, **caractérisé en ce qu'**il comprend, lorsqu'un second état de détection a été fourni, d'arbitrer entre les premier et second états de détection de voie de sortie de façon à accorder une priorité de traitement audit premier état de détection.

3. Procédé selon la revendication 1 ou 2, **caractérisé en ce que** ledit second état de détection de voie de sortie coaxiale à droite, respectivement à gauche, est fourni lorsque la dérivée par rapport au temps de la variation du second angle de cap, respectivement du premier angle de cap, est supérieure à la dérivée par rapport au temps de la variation du premier angle de cap, respectivement du second angle de cap, en ajoutant une marge minimale prédéfinie et que la valeur du premier angle de cap, respectivement du second angle de cap, est nulle à un seuil de tolérance prédéterminé près.

4. Procédé selon l'une quelconque des revendications précédentes, **caractérisé en ce que** ledit premier état de détection de voie de sortie standard à droite, respectivement à gauche, est fourni lorsque la valeur du premier angle de cap, respectivement du second angle de cap, est supérieure audit seuil prédéterminé.

5. Procédé selon l'une quelconque des revendications précédentes, **caractérisé en ce qu'**il comprend une étape de correction de la position de la ligne de marquage au sol détectée du côté où une voie de sortie a été détectée selon le premier ou le second état de détection de voie de sortie.

6. Procédé selon la revendication 5, **caractérisé en ce que** la correction de ladite ligne de marquage au sol détectée du côté de la voie de sortie détectée consiste à reconstruire une ligne de marquage au sol corrigée du côté de la voie de sortie détectée, en fonction de la position de la ligne de marquage au sol détectée du côté opposé à la voie de sortie détectée et d'une mesure de la largeur de voie de circulation acquise à l'aide de la caméra.

7. Procédé selon la revendication 6, **caractérisé en ce que** ladite mesure de la largeur de voie de circulation consiste en une valeur de mesure figée à la valeur de mesure acquise immédiatement avant la détection de ladite voie de sortie.

8. Procédé selon la revendication 6 ou 7, **caractérisé en ce qu'**il comprend une étape de correction de la position latérale du véhicule dans sa voie de circulation en fonction des positions respectives de la ligne de marquage au sol détectée du côté opposé à la voie de sortie détectée et de la ligne de marquage au sol corrigée du côté de la voie de sortie détectée.

9. Dispositif de détection d'une voie de sortie pour un véhicule automobile circulant sur une voie de circulation principale délimitée latéralement par des lignes de marquage au sol, **caractérisé en ce qu'**il comprend au moins une unité de traitement adaptée à coopérer avec une caméra frontale équipant le véhicule et à mettre en oeuvre les étapes du procédé selon l'une quelconque des revendications précédentes.

10. Véhicule automobile, **caractérisé en ce qu'**il comprend au moins une caméra frontale embarquée et un dispositif selon la revendication 9. 1

**Patentansprüche**

1. Verfahren zur Erkennung einer Ausfahrtspur für ein Kraftfahrzeug (10) anhand einer Folge von Bildern in Richtung der Vorderseite des Fahrzeugs, die von einer an Bord befindlichen Kamera in dem Fahrzeug während dessen Fortbewegung auf einer Hauptfahrspur (L) erfasst werden, welche seitlich durch Markierungslinien auf dem Boden begrenzt wird, die sich entlang des rechten ($L_R$) und des linken ($L_L$) Randes der Fahrspur befinden, wobei das Verfahren Folgendes beinhaltet:

einen Schritt, um in den Bildern die rechte Markierungslinie auf dem Boden ($L_R$) und die linke Markierungslinie auf dem Boden ($L_L$) zu erkennen,
einen Schritt, um einen ersten Kurswinkel des Fahrzeugs mit Bezug auf die erkannte rechte Markierungslinie auf dem Boden und einen zweiten Kurswinkel des Fahrzeugs mit Bezug auf die erkannte linke Markierungslinie auf dem Boden zu bestimmen,

einen Schritt, der dazu fähig ist, einen ersten Ausfahrtspur-Erkennungszustand bereitzustellen, der für die Erkennung einer rechten (EXIT_STD_R) bzw. einer linken (EXIT_STD_L) Standardausfahrtspur repräsentativ ist, in Abhängigkeit von dem Vergleich der Werte des ersten Kurswinkels bzw. des zweiten Kurswinkels mit einem vorbestimmten Schwellenwert,

wobei das Verfahren **dadurch gekennzeichnet ist, dass** es ferner einen Schritt beinhaltet, der dazu fähig ist, einen zweiten Ausfahrtspur-Erkennungszustand bereitzustellen, der für die Erkennung einer rechten (EXIT_R) bzw. einer linken (EXIT_L) Ausfahrtspur, die zu der Hauptfahrspur (L) koaxial ist, repräsentativ ist, in Abhängigkeit einerseits von dem Vergleich zwischen den zeitlichen Ableitungen der Änderung des ersten und des zweiten Kurswinkels und andererseits der Überprüfung, dass der Wert des ersten Kurswinkels bzw. des zweiten Kurswinkels im Wesentlichen nahe eines Werts Null bleibt.

2.  Verfahren nach Anspruch 1, **dadurch gekennzeichnet, dass** es, wenn ein zweiter Erkennungszustand bereitgestellt wurde, das Entscheiden zwischen dem ersten und dem zweiten Ausfahrtspur-Erkennungszustand beinhaltet, sodass dem ersten Erkennungszustand eine Verarbeitungspriorität zugewiesen wird.

3.  Verfahren nach Anspruch 1 oder 2, **dadurch gekennzeichnet, dass** der zweite Erkennungszustand einer rechten bzw. einer linken koaxialen Ausfahrtspur bereitgestellt wird, wenn, unter Hinzufügung einer vordefinierten Mindestmarge, die zeitliche Ableitung der Änderung des zweiten Kurswinkels bzw. des ersten Kurswinkels größer ist als die zeitliche Ableitung der Änderung des ersten Kurswinkels bzw. des zweiten Kurswinkels und der Wert des ersten Kurswinkels bzw. des zweiten Kurswinkels abgesehen von einem vorbestimmten Toleranzschwellenwert Null ist.

4.  Verfahren nach einem beliebigen der vorhergehenden Ansprüche, **dadurch gekennzeichnet, dass** der erste Erkennungszustand einer rechten bzw. einer linken Standardausfahrtspur bereitgestellt wird, wenn der Wert des ersten Kurswinkels bzw. des zweiten Kurswinkels größer als der vorbestimmte Schwellenwert ist.

5.  Verfahren nach einem beliebigen der vorhergehenden Ansprüche, **dadurch gekennzeichnet, dass** es einen Schritt des Korrigierens der Position der erkannten Markierungslinie auf dem Boden auf derjenigen Seite, auf der gemäß dem ersten oder dem zweiten Ausfahrtspur-Erkennungszustand eine Ausfahrtspur erkannt wurde, beinhaltet.

6.  Verfahren nach Anspruch 5, **dadurch gekennzeichnet, dass** das Korrigieren der erkannten Markierungslinie auf dem Boden auf der Seite der erkannten Ausfahrtspur darin besteht, auf der Seite der erkannten Ausfahrtspur eine korrigierte Markierungslinie auf dem Boden zu rekonstruieren, in Abhängigkeit von der Position der erkannten Markierungslinie auf dem Boden auf der gegenüberliegenden Seite der erkannten Ausfahrtspur und von einem Maß der Breite der Fahrspur, das mit Hilfe der Kamera erfasst wird.

7.  Verfahren nach Anspruch 6, **dadurch gekennzeichnet, dass** das Maß der Breite der Fahrspur aus einem Messwert besteht, der auf den Messwert festgelegt ist, der unmittelbar vor der Erkennung der Ausfahrtspur erfasst wurde.

8.  Verfahren nach Anspruch 6 oder 7, **dadurch gekennzeichnet, dass** es einen Schritt des Korrigierens der seitlichen Position des Fahrzeugs auf seiner Fahrspur in Abhängigkeit von den jeweiligen Positionen der erkannten Markierungslinie auf dem Boden auf der gegenüberliegenden Seite der erkannten Ausfahrtspur und der korrigierten Markierungslinie auf dem Boden auf der Seite der erkannten Ausfahrtspur beinhaltet.

9.  Vorrichtung zur Erkennung einer Ausfahrtspur für ein Kraftfahrzeug, das auf einer Hauptfahrspur fährt, die seitlich durch Markierungslinien auf dem Boden begrenzt wird, **dadurch gekennzeichnet, dass** es mindestens eine Verarbeitungseinheit beinhaltet, die dazu angepasst ist, mit einer Frontkamera, mit der das Fahrzeug ausgestattet ist, zusammenzuwirken und die Schritte des Verfahren nach einem beliebigen der vorhergehenden Ansprüche umzusetzen.

10. Kraftfahrzeug, **dadurch gekennzeichnet, dass** es mindestens eine an Bord befindliche Frontkamera und eine Vorrichtung nach Anspruch 9 beinhaltet.

**Claims**

1.  Method for detecting an exit lane for a motor vehicle (10) on the basis of a succession of images from ahead of the vehicle which are acquired by a camera on board the vehicle as it moves along a main traffic lane (L) bounded laterally by ground marking lines located along the right-hand edge ($L_R$) and left-hand edge ($L_L$) of said traffic lane, said method comprising:

a step for detecting, in said images, the right-hand ground marking line ($L_R$) and the left-hand ground marking line ($L_L$),

a step for determining a first heading angle of the vehicle with respect to the detected right-hand ground marking line and a second heading angle of the vehicle with respect to the detected left-hand ground marking line,

a step able to provide a first exit lane detection state, representative of the detection of a standard exit lane on the right (EXIT_STD_R) or on the left (EXIT_STD_L), respectively, according to the comparison of the values of the first heading angle or of the second heading angle, respectively, with a predetermined threshold,

said method being **characterized in that** it further comprises a step able to provide a second exit lane detection state, representative of the detection of an exit lane on the right (EXIT_R) or on the left (EXIT_L), respectively, coaxial with the main traffic lane (L), according to, first, the comparison between the derivatives with respect to time of the variation in the first and second heading angles and, second, the verification that the value of the first heading angle or of the second heading angle, respectively, remains substantially close to a zero value.

2. Method according to Claim 1, **characterized in that** it comprises, when a second detection state has been provided, arbitrating between the first and second exit lane detection states so as to grant processing priority to said first detection state.

3. Method according to Claim 1 or 2, **characterized in that** said second exit lane detection state for a coaxial exit lane on the right or on the left, respectively, is provided when the derivative with respect to time of the variation in the second heading angle or in the first heading angle, respectively, is greater than the derivative with respect to time of the variation in the first heading angle or in the second heading angle, respectively, with the addition of a predefined minimum margin, and the value of the first heading angle or of the second heading angle, respectively, is zero to within a predetermined tolerance threshold.

4. Method according to any one of the preceding claims, **characterized in that** said first exit lane detection state for a standard exit lane on the right or on the left, respectively, is provided when the value of the first heading angle or of the second heading angle, respectively, is higher than said predetermined threshold.

5. Method according to any one of the preceding claims, **characterized in that** it comprises a step of correcting the position of the ground marking line detected on the side where an exit lane has been detected according to the first or the second exit lane detection state.

6. Method according to Claim 5, **characterized in that** the correction of said ground marking line detected on the side of the detected exit lane consists in reconstructing a corrected ground marking line on the side of the detected exit lane according to the position of the ground marking line detected on the opposite side with respect to the detected exit lane and a measurement of the traffic lane width acquired using the camera.

7. Method according to Claim 6, **characterized in that** said measurement of the traffic lane width consists of a measurement value fixed at the measurement value acquired immediately before the detection of said exit lane.

8. Method according to Claim 6 or 7, **characterized in that** it comprises a step of correcting the lateral position of the vehicle in its traffic lane according to the respective positions of the ground marking line detected on the opposite side with respect to the detected exit lane and of the corrected ground marking line on the side of the detected exit lane.

9. Device for detecting an exit lane for a motor vehicle traveling on a main traffic lane bounded laterally by ground marking lines, **characterized in that** it comprises at least one processing unit suitable for cooperating with a front camera with which the vehicle is equipped and for implementing the steps of the method according to any one of the preceding claims.

10. Motor vehicle, **characterized in that** it comprises at least one onboard front camera and a device according to Claim 9.

# Fig.1

# Fig.2

EXIT_L

EXIT_R

EXIT_R

$L_{R\_corrected}$

L

$L_R$

$L_L$

10

**Fig.3**

EXIT_L

EXIT_L

EXIT_R

$L_{L\_corrected}$

L

$L_L$

$L_R$

10

**Fig.4**

**Fig.5**

**Fig.6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017091564 A
- DE 102010062129

- US 2018156626 A